# DEMANDE DE BREVET EUROPEEN

(11) **EP 0 718 480 A1**
(43) Date de publication de la demande: **26.06.1996**
(21) Numéro de dépôt: 95402655.5
(22) Date de dépôt: 24.11.1995
(51) Int. Cl.: F01N 7/10, F02F 1/00, F01N 3/34, F02M 25/07

(54) **Dispositif d'échappement pour moteur à combustion interne**

(30) Priorité: 25.11.1994 FR 9414137; 31.08.1995 FR 9510250
(71) Demandeur: Société Anonyme dite: REGIE NATIONALE DES USINES RENAULT, F-92109 Boulogne Billancourt (FR)
(72) Inventeur: Davy, Jean, F-94240 L'Hay-les-Roses (FR); Gastaldi, Patrick, F-91190 Gif-sur-Yvette (FR); Grembowski, Laurent, F-78500 Sartrouville (FR); Thivin, Guy, F-92250 La Garenne Colombes (FR)
(74) Mandataire: Fernandez, Francis Lionel

(57) **Abrégé**

Dispositif d'échappement pour moteur à combustion interne multicylindre comprenant des conduits d'échappement (4) ménagés dans la culasse (1) du moteur, des moyens collecteurs d'échappement (8) et une ligne d'échappement munie d'un pot catalytique, chacun desdits conduits d'échappement (4) mettant en communication une chambre de combustion (3) avec la face latérale d'échappement (10) de la culasse (1) sur laquelle vient se fixer le collecteur d'échappement (8), caractérisé en ce que lesdits conduits d'échappement (4) débouchent dans une capacité de volume adapté, ladite capacité possédant une unique sortie (13) destinée à être raccordée directement à la ligne d'échappement.

## Description

La présente invention se rapporte à un dispositif d'échappement pour les moteurs à combustion interne multicylindres destinés notamment à équiper les véhicules automobiles, et plus particulièrement à un dispositif d'échappement des gaz de combustion adapté pour permettre un amorçage rapide du pot catalytique.

Classiquement, le dispositif d'échappement des gaz de combustion d'un moteur à combustion interne multicylindre comprend des conduits d'échappement ménagés dans la culasse, un collecteur d'échappement fixé à la culasse et la ligne d'échappement proprement dite formée de tubes, de pots de détente, silencieux, etc.. qui s'étend jusqu'à la bouche de sortie à l'air libre.

Pour diminuer la teneur en produits polluants contenus dans les gaz de combustion rejetés à l'atmosphère, l'industrie automobile a adopté l'utilisation de dispositifs de dépollution traitant par conversion- catalytique les composants nocifs des gaz de combustion. Ces dispositifs, encore appelés pots catalytiques, disposés sur la ligne d'échappement sont le siège de réactions chimiques d'oxydation des hydrocarbures imbrûlés HC et du monoxyde de carbone CO ainsi que de réduction des oxydes d'azote NOx.

Toutefois, de telles réactions catalytiques ne peuvent pas s'amorcer en deçà d'un certain niveau de température. Il s'ensuit donc, notamment lors des démarrages à froid, une phase de fonctionnement plus ou moins longue pendant laquelle les produits polluants contenus dans les gaz de combustion ne sont pas ou insuffisamment traités. On peut ainsi estimer que 80 à 90% des polluants émis lors d'un cycle de fonctionnement du moteur, l'ont été pendant les deux premières minutes de fonctionnement du moteur.

Différentes solutions ont été proposées pour remédier à cet inconvénient. On peut citer parmi les plus performantes, les systèmes d'injection d'air à l'échappement pour provoquer la post-combustion des gaz brûlés et accélérer la montée en température du pot catalytique. En effet, l'apport d'air combiné à la présence d'une quantité résiduelle de carburant dans les gaz brûlés provoque des réactions de post-combustion exothermiques qui augmentent sensiblement la température de ces derniers et donc accélèrent la montée en température des catalyseurs qu'ils balayent.

Cet apport d'air extérieur, pour être efficace, doit toutefois se faire le plus près possible de la sortie des chambres de combustion du moteur, de façon à utiliser au mieux l'énergie thermique des gaz de combustion.

On peut également citer les moyens de chauffage ou préchauffage électriques ou électromagnétiques des pots catalytiques tels que décrits dans les demandes de brevet WO-A-90/14507, WO-A-92/02714 ou encore EP-A-465.184. Le document WON90/02250 prévoit quant à lui l'utilisation d'un catalyseur dit de démarrage chauffé utilisé uniquement tant que les gaz de combustion n'ont pas atteint une température suffisante, des moyens déflecteurs de courant dirigeant les gaz de combustion en fonction de leur température vers le catalyseur de démarrage ou dans une voie de contournement.

Ces solutions ont pour inconvénients d'impliquer des modes de réalisation onéreux et de nécessiter pour fonctionner un apport d'énergie électrique plus ou moins important.

Une autre solution pour accélérer la montée en température du catalyseur consiste à rapprocher ce dernier des chambres de combustion de façon à limiter les pertes thermiques et à conserver une température élevée aux gaz de combustion entrant dans le pot catalytique. Cette dernière solution particulièrement peu coûteuse puisqu'aucun dispositif supplémentaire n'est nécessaire, s'avère toutefois difficile à mettre en oeuvre du fait des dimensions relativement importantes du collecteur d'échappement s'étendant entre la culasse et la ligne d'échappement où est implanté le pot catalytique.

La présente invention a donc pour but de remédier à ces divers inconvénients grâce à un dispositif d'échappement pour moteur à combustion interne qui permet une montée extrêmement rapide en température du pot catalytique par limitation des pertes thermiques essentiellement à faibles charges et qui soit simple et économique à réaliser.

Le dispositif d'échappement pour moteur à combustion interne multicylindre selon l'invention comprend des conduits d'échappement ménagés dans la culasse du moteur, des moyens collecteurs et une ligne d'échappement munie d'un pot catalytique, chacun des conduits d'échappement met en communication une chambre de combustion à travers au moins un orifice formant le siège d'une soupape d'échappement à tige, avec les moyens collecteurs d'échappement.

Selon l'invention, le dispositif d'échappement pour moteur à combustion interne est caractérisé en ce que les moyens collecteurs s'étendant entre les conduits d'échappement et la ligne d'échappement sont constitués par une unique capacité oblongue de volume adapté, cette capacité possédant une unique ouverture de sortie destinée à être raccordée directement à la ligne d'échappement.

Selon une autre caractéristique du dispositif d'échappement pour moteur à combustion interne objet de l'invention, la capacité présente une section transversale supérieure à au moins quatre fois la section de l'un quelconque des conduits d'échappement.

Selon une autre caractéristique du dispositif d'échappement pour moteur à combustion interne objet de l'invention, la culasse présente des passages d'injection d'air débouchant d'une part, dans un canal de distribution d'air ménagé dans la face d'échappement de la culasse et d'autre part, dans les conduits d'échappement au voisinage des chambres de combustion.

Selon une autre caractéristique du dispositif d'échappement pour moteur à combustion interne objet de l'invention, la culasse présente un conduit de recirculation des gaz de combustion s'étendant entre une extrémité de la capacité et une face de la culasse sur laquelle vient se fixer la vanne EGR.

Selon encore une autre caractéristique du dispositif d'échappement pour moteur à combustion interne objet de l'invention, les conduits d'échappement ménagés dans la culasse sont incurvés en direction du plan transversal médian de cette dernière.

Selon une autre caractéristique du dispositif d'échappement pour moteur à combustion interne objet de l'invention, l'ouverture de sortie de la capacité est ménagée au voisinage de l'une des extrémités longitudinales de ce dernier, la section transversale de la capacité augmentant progressivement entre l'extrémité longitudinale opposée à l'extrémité où est ménagé l'ouverture de sortie des moyens obturateurs et cette dernière.

Selon une autre caractéristique du dispositif d'échappement pour moteur à combustion interne objet de l'invention, la capacité est logée pour toute ou partie dans la culasse.

Selon une autre caractéristique du dispositif d'échappement pour moteur à combustion interne objet de l'invention, les conduits d'échappement s'étendant entre les chambres de combustion et la capacité sont de longueur réduite, inférieure à 50 mm.

Selon un mode de réalisation particulier du dispositif d'échappement pour moteur à combustion interne objet de l'invention, la capacité est ménagée pour partie à travers la culasse et pour partie dans un collecteur d'échappement venant se fixer sur la culasse, et s'étend parallèlement à l'axe longitudinal de la culasse.

Selon un autre mode de réalisation particulier du dispositif d'échappement pour moteur à combustion interne objet de l'invention, la capacité est entièrement intégrée à un collecteur d'échappement, ce dernier présentant une paroi latérale servant de bride de fixation à travers laquelle est ménagé au moins un orifice de passage destiné à être positionné en regard des orifices de sorties des conduits d'échappement.

On comprendra mieux les buts, aspects et avantages de la présente invention, d'après la description donnée ci-après de différents modes de réalisation de l'invention, présentés à titre d'exemples non limitatifs, en se référant aux dessins annexés, dans lesquels :
la figure 1 est une vue en perspective partielle présentant un premier mode de réalisation du dispositif d'échappement selon l'invention ;
la figure 2 est une vue en coupe partielle de la culasse ainsi que du collecteur d'échappement qui lui est fixé, suivant la ligne II-II de la figure 1 ;
la figure 3 est une vue en coupe partielle de la culasse, suivant la ligne III-III de la figure 1 ;
la figure 4 est une vue en perspective du collecteur d'échappement selon le premier mode de réalisation de l'invention.
la figure 5 représente une vue en perspective axonométrique d'un second mode de réalisation du dispositif d'échappement selon l'invention ;
la figure 6 est une vue en coupe partielle de la culasse ainsi que du collecteur d'échappement qui lui est fixé, suivant la ligne VI-VI de la figure 5.

Pour faciliter la lecture des dessins, les mêmes pièces portent les mêmes références d'une figure à l'autre. Par ailleurs, seuls les éléments nécessaires à la compréhension de l'invention ont été représentés.

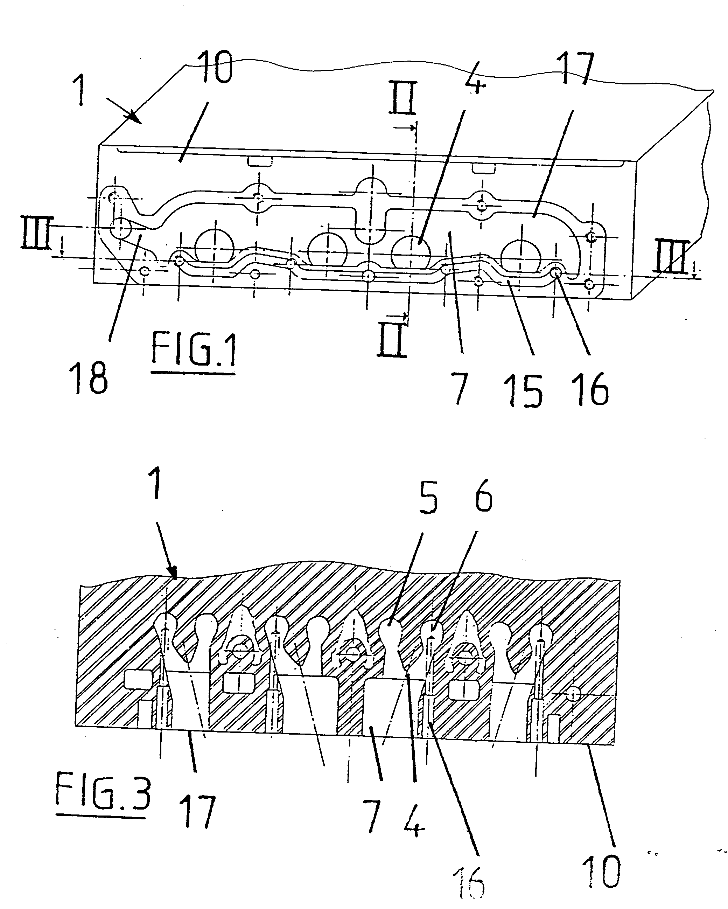

En se reportant aux figures 1 à 4 correspondant au premier mode de réalisation, on voit une partie de la culasse 1 d'un moteur à combustion interne de type à quatre cylindres en ligne (à allumage commandé ou à allumage par compression) destiné par exemple à équiper un véhicule automobile.

Les chambres de combustion 3 de la culasse 1 de type à flux croisé (cross-flow) communiquent donc par des ouvertures servant de sièges à des soupapes actionnées par des cames appropriées respectivement d'admission et d'échappement, avec les faces latérales opposées de la culasse à travers des conduits respectivement d'admission et d'échappement s'étendant transversalement par rapport à l'axe longitudinal de la culasse 1.

Selon l'exemple figuré, chaque conduit d'échappement 4 débouche dans sa chambre de combustion respective 3 par deux orifices distincts 5 et 6 de type siamoisés par l'intermédiaire d'une partie d'extrémité formant deux branches réunies en Y. Bien évidemment cette disposition n'est pas exclusive de la présente invention, celle-ci s'appliquant également à des culasses ne présentant qu'un orifice d'échappement par chambre de combustion ou encore présentant deux orifices ou plus par chambres de combustion associés à des conduits d'échappement séparés.

L'autre extrémité des conduits d'échappement 4 s'étendant à l'opposé de la chambre de combustion 3, débouche dans une capacité collectrice 7 ménagée dans le corps de la culasse 1 et s'étendant parallèlement à l'axe longitudinal de cette dernière.

La capacité 7 dans laquelle débouche tous les conduits d'échappement 4, est agencée de façon à ne pas augmenter les dimensions transversales de la culasse 1 par rapport aux solutions antérieures. Il en résulte que les conduits d'échappement 4 ménagés dans la culasse sont de longueur extrêmement réduite, inférieure à 50 mm.

La capacité 7 venue directement de moulage débouche sur la face latérale 10 de la culasse 1, dite face d'échappement, par une ouverture oblongue 17 s'étendant sensiblement sur toute la longueur de la capacité 7 pour être raccordée à un collecteur d'échappement correspondant 8 auquel est connectée la ligne d'échappement non figurée qui est équipée classiquement d'un pot destiné au traitement catalytique des gaz d'échappement.

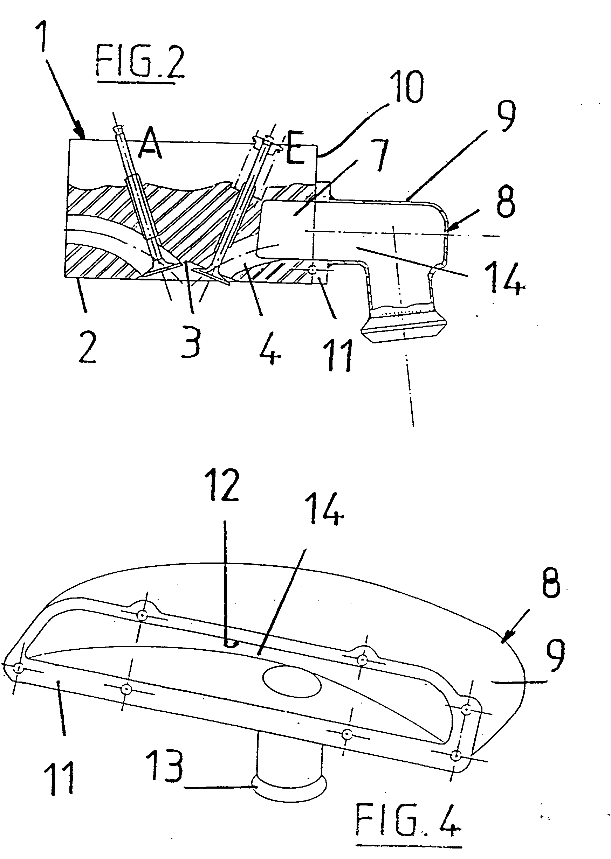

Conformément aux figures 2 et 4, on voit que le collecteur d'échappement 8 est constitué essentiellement par un boîtier oblong 9 venant se fixer sur la culasse 1, ce boîtier définissant une capacité 14 à l'intérieur de laquelle circulent librement les gaz brûlés.

Le boîtier 9 comporte une ouverture d'entrée 12 correspondant sensiblement à l'ouverture 17 de la capacité 7 et une ouverture de sortie 13 formée par exemple dans la partie centrale du boîtier 9, cette ouverture de sortie 13 étant destinée à être raccordée à la ligne d'échappement par l'intermédiaire d'un embout adapté.

Le collecteur 8 est réalisé par fonderie ou bien encore à partir de tôles d'acier embouties mécano-soudées. Il présente une bride de fixation 11 entourant l'ouverture 12 du boîtier 9, permettant le vissage du collecteur 8 sur la culasse 1 avec interposition d'un joint d'étanchéité non figuré.

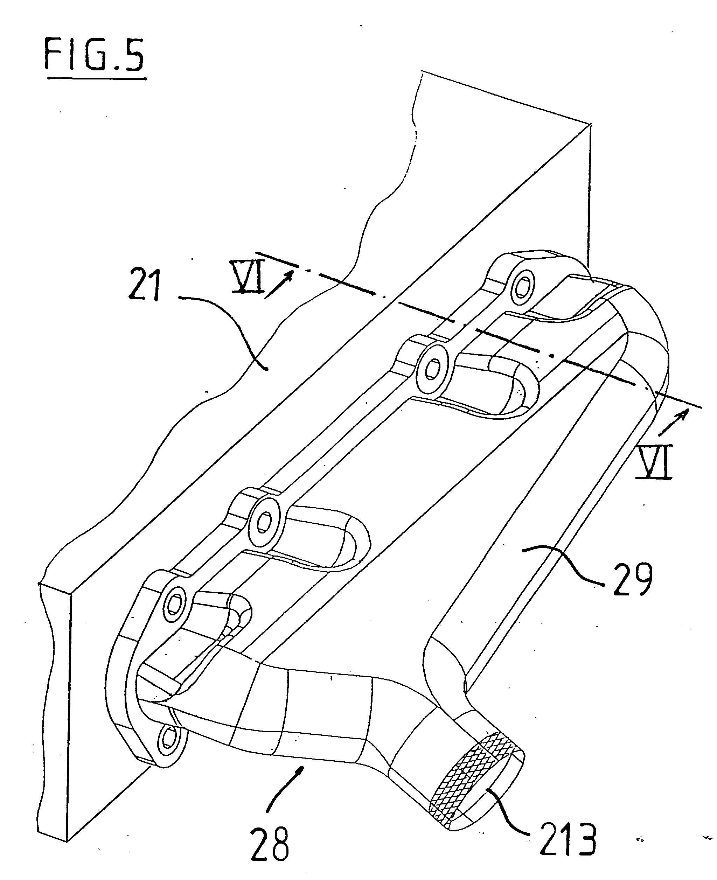

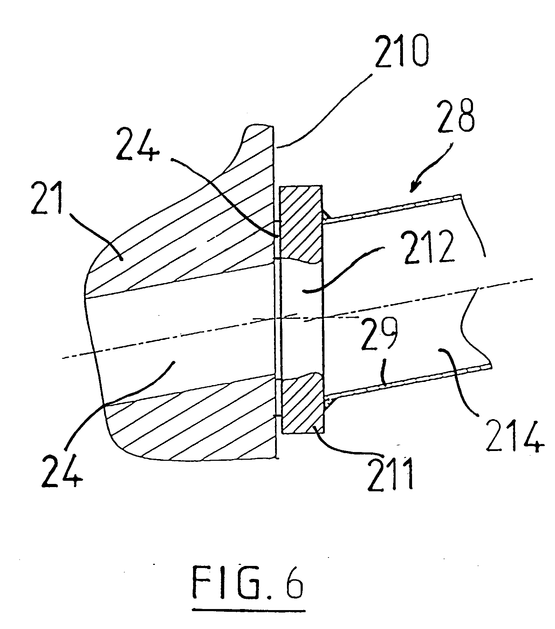

Selon le second mode de réalisation présenté sur les figures 5 et 6, le collecteur d'échappement référencé 28 est plus particulièrement destiné à équiper un moteur à combustion interne pour véhicule automobile, du type multicylindre à allumage commandé ou à allumage par compression, dont seule la culasse 21 a été représentée.

La culasse 21, destinée à recouvrir le bloc-cylindres dans lequel sont montés plusieurs pistons qui coulissent dans des alésages cylindriques correspondants, est classiquement percée de conduits 24 pour notamment permettre l'échappement des gaz brûlés.

Ces conduits d'échappement 24 s'étendent sensiblement transversalement à travers la culasse 21 pour déboucher d'une part sur l'une des faces latérales de la culasse 21 où elles sont raccordées au collecteur 28 et d'autre part, dans les chambres de combustion agencées sur la face inférieure de la culasse par des orifices que viennent obturer des soupapes à tige actionnées par des cames de commande.

Le circuit d'échappement des gaz brûlés du moteur se prolonge à la sortie du collecteur d'échappement 28 par une ligne d'échappement s'étendant principalement sous le véhicule et en tête de laquelle est placé un pot catalytique non figuré.

Le collecteur d'échappement 28 est constitué essentiellement par un boîtier oblong 29 venant se fixer sur la culasse 21, ce boîtier définissant une large capacité intérieure 214, à l'intérieur de laquelle circulent librement les gaz brûlés entre une pluralité de passages d'entrée 212 disposés régulièrement sur toute la longueur du boîtier 29 en correspondance avec les ouvertures de sortie des conduits d'échappement 24, et une unique ouverture de sortie 213 formée par exemple à l'une des extrémités longitudinales du boîtier 29, cette ouverture de sortie 213 étant destinée à être raccordée à la ligne d'échappement par l'intermédiaire d'un embout adapté.

Ce boîtier 29, obtenu par fonderie ou bien encore réalisé à partir de tôles d'acier mécano-soudées, présente une paroi latérale plane 211 formant bride de fixation destinée à venir en appui contre la face échappement de la culasse 21 avec interposition d'un joint d'étanchéité.

La paroi 211 du boîtier 29 présente d'une part dans sa partie centrale des passages 212 pour la circulation des gaz brûlés régulièrement disposés pour venir en correspondance avec les ouvertures de sortie des conduits d'échappement 24 portées de la culasse 21 et d'autre part à sa périphérie des oeilletons pour le passage des vis de fixation non figurées dont les extrémités filetées sont reçues dans des trous taraudés correspondants de la culasse.

Les passages 212 peuvent être de section constante sur toute l'épaisseur de la paroi 211 ou bien encore être de section évolutive, par exemple évasée selon un angle de cône compris entre 5° et 10° et ce, pour faciliter l'écoulement des gaz d'échappement en limitant les pertes de charge. L'épaisseur de la paroi 211, qui est de l'ordre de quelques millimètres, est déterminée suivant le matériau utilisé pour offrir la résistance mécanique souhaitée.

La capacité 214 définissant un vaste volume libre pour l'écoulement des gaz brûlés est dimensionnée de façon à ce que la section transversale, s'étendant perpendiculairement à l'axe longitudinal définissant la direction d'écoulement moyen, soit grande devant le diamètre hydraulique des passages 212.

De préférence, le rapport des surfaces hydrauliques entre respectivement la section transversale de la capacité 214 et la section d'un des passages 212 est choisi supérieur à quatre. De préférence également, la section transversale de la capacité 214 évolue en augmentant progressivement entre l'extrémité longitudinale opposée à l'extrémité où est ménagée l'ouverture de sortie et cette dernière.

Les dimensions de la capacité 214 sont choisies, après calculs et mesures au banc d'essai, d'autant plus importantes que le nombre des cylindres du moteur raccordés audit collecteur 28 est grand ou encore que la cylindrée est élevée. Par ailleurs, les dimensions de l'ouverture de sortie 213 sont choisies aussi importantes que possible compte tenu des contraintes d'implantation dans le compartiment moteur du véhicule.

Dans le premier mode de réalisation du dispositif d'échappement selon l'invention décrit conformément aux figures 1 à 4, la capacité 14 communique donc directement avec la capacité 7 intégrée dans la culasse 1 pour définir une capacité unique encore appelée plenum dans laquelle débouchent tous les conduits d'échappement 4. Cette capacité 7,14 a la même fonction que la capacité 214 du deuxième mode de réalisation, figures 5 à 6. Ces capacités dont la section est grande devant la section hydraulique des conduits d'échappement 4;24, et qui constituent des moyens collecteurs intercalés entre les conduits d'échappement et la ligne d'échappement, ont pour effet de réduire les échanges thermiques lors de la collecte des gaz issus des différentes chambres de combustion en réduisant la surface de paroi au contact des gaz brûlés ainsi que la vitesse d'écoulement de ces derniers. Ceci permet de réduire singulièrement le refroidissement des gaz brûlés notamment lors des fonctionnements à faibles charges où l'incidence de ces paramètres s'avèrent primordiaux sur les échanges thermiques et donc de favoriser la montée en température du pot catalytique.

Par contre lors des fonctionnements à fortes charges, l'effet réducteur de vitesse de cette configuration s'atténue ce qui permet alors d'obtenir un bon refroidissement thermique des gaz d'échappement nécessaire à la tenue du pot catalytique s'étendant en aval du collecteur d'échappement 8. Le refroidissement des ga: d'échappement à fortes charges peut être accentué en ayant recours par exemple à des matériaux à forts coefficients thermiques pour la réalisation des parois du boîtier 9 du collecteur d'échappement et/ou en munissant ce dernier d'ailettes de refroidissement, cette dernière disposition étant sans incidence sur les pertes thermiques des gaz brûlés lors des fonctionnements à faibles charges.

Par ailleurs, le rapprochement du pot catalytique est possible sans affecter sensiblement les performances du moteur grâce également au volume important de la capacité 7,14;214 qui permet de tranquilliser l'écoulement des gaz brûlés et de filtrer les différentes pulsations de pression générées par chacun des cylindres, d'où une absence quasi totale d'interaction des cylindres entre eux et donc la faculté de rapprocher le pot catalytique de la sortie 13;213 du collecteur d'échappement 8;28.

Dans le premier mode de réalisation, l'intégration partielle de la capacité dans la culasse 1, rend le collecteur d'échappement 8 extrêmement compact ce qui participe également à la réduction du trajet des gaz entre les chambres de combustion 3 et le pot catalytique, ce dernier pouvant ainsi être facilement implanté à moins de 800 mm des soupapes d'échappement.

Par ailleurs, cette réalisation de la capacité en deux parties permet l'allégement du moteur par rapport aux solutions dans lesquelles la capacité est entièrement agencée dans le collecteur.

Les dimensions de la capacité 7,14;214 sont choisies, après calculs et mesures au banc d'essai, d'autant plus importantes que le nombre des cylindres raccordés est grand ou encore que la cylindrée est élevée. Par ailleurs, les dimensions de l'ouverture de sortie 13,213 sont choisies aussi importantes que possible compte tenu des contraintes d'implantation dans le compartiment moteur du véhicule.

Les aménagements présentés dans les paragraphes suivants concernent plus particulièrement le premier mode de réalisation du dispositif d'échappement selon l'invention, figures 1 à 4, pour lesquels la mise en oeuvre est facilitée par la présence d'une capacité collectrice en deux parties. Bien entendu, ces aménagements ne sont nullement limités à ce mode de réalisation et peuvent être notamment mis en oeuvre avec le second mode de réalisation du dispositif d'échappement selon l'invention.

Pour accélérer encore la montée en température du pot catalytique disposé sur la ligne d'échappement en aval du collecteur 8 dans le sens d'écoulement des gaz d'échappement, le moteur peut être équipé d'un dispositif d'injection d'air à l'échappement. Un tel dispositif comprend notamment une pompe pilotée (non représentée) et un réseau de distribution d'air intégré directement à la culasse 1.

Ce réseau de distribution d'air représenté sur le premier mode de réalisation conformément aux figures 1 et 3, comporte un canal d'amenée d'air 15 s'étendant le long de la face 10 et venant de fonderie avec la culasse 1, de façon à être fermé par la bride de fixation 11 du collecteur d'échappement 8, et des passages d'injection d'air 16. Ces passages d'injection d'air, un par cylindre, sont usinés directement à travers la culasse 1 pour déboucher dans chacun des conduits d'échappement 4 au voisinage de la chambre de combustion correspondante.

Le canal de distribution d'air 15 s'étend axialement sur sensiblement toute la longueur de la capacité 14 au voisinage du bord inférieur de l'ouverture 17. Pour favoriser la réalisation des passages 16, les conduits d'échappement 4 qui s'étendent sensiblement horizontalement à travers la culasse 1 de façon à réduire l'encombrement en hauteur de cette dernière, sont inclinés en direction du plan transversal médian de la culasse 1.

Le décalage entre les conduits d'échappement 4 et l'axe des cylindres correspondants permet d'usiner simplement les passages d'injection d'air- 16 par des perçages opérés perpendiculairement à la face 10 de la culasse 1. Chacun des passages 16 débouchent alors d'une part dans le fond du canal d'amenée d'air 15 et d'autre part dans celle des deux branches du conduit d'échappement 4 correspondant qui communique avec l'orifice 6 le plus éloigné du plan transversal médian de la culasse 1.

L'inclination des conduits d'échappement vers le plan transversal médian offre l'avantage supplémentaire de réduire la longueur de la capacité 7 en réduisant l'entraxe des conduits d'échappement extrêmes (cylindres 1 et 4) et donc de réduire l'encombrement du collecteur d'échappement 8.

La présence de la capacité collectrice 7 intégrée à la culasse 1 permet également de réaliser simplement un piquage de recirculation des gaz de combustion vers l'admission du moteur. Ce piquage se présente sous la forme d'un conduit 18 venant de fonderie et s'étendant entre l'une des extrémités axiales de la capacité 7 et la face transversale adjacente de la culasse 1.

La vanne EGR non figurée apte à contrôler le débit des gaz brûlés recirculés suivant les conditions de fonctionnement du moteur, peut alors être montée par des moyens de fixation appropriés directement sur la culasse 1 à la sortie du conduit 18. Cette vanne EGR est ensuite reliée au collecteur d'admission par une conduite de recirculation non figurée.

Cette disposition suivant l'invention, permet un agencement particulièrement compact et simple des moyens de recirculation des gaz brûlés, supprimant notamment les opérations de perçage du collecteur d'échappement et de mise en place de la canalisation de liaison s'étendant selon l'art antérieur entre la vanne EGR et le collecteur d'échappement.

Par ailleurs, le montage de la vanne EGR directement sur la culasse 1 permet de limiter le porte-à-faux du collecteur d'admission ou du collecteur d'échappement et donc de réduire les vibrations du moteur. Par ailleurs, un tel montage s'avère également préférable pour des raisons d'encombrement ainsi que de facilité de fixation.

Le montage de la vanne EGR sur la culasse 1 directement à la sortie du conduit 18 permet également de limiter l'encrassement de celle-ci, ce qui permet d'assurer une bonne constance dans le temps du réglage de la quantité de gaz recirculés. En effet, du fait du positionnement de la vanne EGR directement au contact de la culasse 1, celle-ci est maintenue pendant toute la durée du fonctionnement du moteur à une température suffisante pour éviter ou pour le moins fortement limiter la condensation des particules de suie naturellement mêlées aux gaz brûlés recirculés.

Bien entendu, l'invention n'est nullement limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif d'échappement pour moteur à combustion interne multicylindre comprenant des conduits d'échappement (4;24) ménagés dans la culasse (1;21) du moteur, des moyens collecteurs d'échappement (8;28) et une ligne d'échappement munie d'un pot catalytique, chacun desdits conduits d'échappement (4;24) mettant en communication une chambre de combustion (3;23) à travers au moins un orifice formant le siège d'une soupape d'échappement à tige avec les moyens collecteurs (8;28), caractérisé en ce que lesdits moyens collecteurs (8;28) sont constitués par une unique capacité (7,14;214) oblongue de volume adapté dans laquelle débouchent lesdits conduits d'échappement (4;24), ladite capacité (7,14;214) possédant une unique ouverture de sortie (13;213) destinée à être raccordée directement à la ligne d'échappement.

2. Dispositif d'échappement pour moteur à combustion interne selon la revendication 1, caractérisé en ce que ladite capacité (7,14;214) présente une section transversale supérieure à au moins quatre fois la section de l'un quelconque desdits conduits d'échappement (4;24).

3. Dispositif d'échappement pour moteur à combustion interne selon l'une quelconque des revendications 1 à 2, caractérisé en ce que la culasse (1;21) présente des passages d'injection d'air (16) débouchant d'une part, dans un canal de distribution d'air (15) ménagé dans la face d'échappement (10;210) de la culasse (1;21) et d'autre part, dans les conduits d'échappement (4;24) au voisinage des chambres de combustion (3;23).

4. Dispositif d'échappement pour moteur à combustion interne selon l'une quelconque des revendications 1 à 3, caractérisé en ce que la culasse (1;21) présente un conduit (18) de recirculation des gaz de combustion s'étendant entre une extrémité de la capacité (7,14;214) et une face de la culasse (1;21) sur laquelle vient se fixer la vanne EGR.

5. Dispositif d'échappement pour moteur à combustion interne selon l'une quelconque des revendications 1 à 4, caractérisé en ce que les conduits d'échappement (4;24) sont incurvés en direction du plan transversal médian de la culasse (1;21).

6. Dispositif d'échappement pour moteur à combustion interne selon l'une quelconque des revendications 1 à 5, caractérisé en ce que ladite ouverture de sortie (13;213) est ménagée au voisinage de l'une des extrémités longitudinales de ladite capacité (7,14;214), la section transversale de ladite capacité (7,14;214) augmentant progressivement entre l'extrémité longitudinale opposée à l'extrémité ou est ménagée ladite ouverture de sortie (13;213) et ladite extrémité où est ménagée ladite ouverture de sortie (13;213).

7. Dispositif d'échappement pour moteur à combustion interne selon l'une quelconque des revendications 1 à 6, caractérisé en ce que ladite capacité (7,14;214) est logée pour toute ou partie dans la culasse (1;21).

8. Dispositif d'échappement pour moteur à combustion interne selon la revendication 7, caractérisé en ce que lesdits conduits d'échappement (4;24) s'étendant entre les chambres de combustion et ladite capacité (7,14;214) sont de longueur réduite, inférieure à 50 mm.

9. Dispositif d'échappement pour moteur à combustion interne selon la revendication 7, caractérisé en ce que ladite capacité (7,14;214) est ménagée pour partie à travers la culasse (1;21) et pour partie dans un collecteur d'échappement (8;28) venant se fixer sur la culasse, ladite capacité (7,14;214) s'étendant parallèlement à l'axe longitudinal de ladite culasse (1;21).

10. Dispositif d'échappement pour moteur à combustion interne selon l'une des revendications 1 à 6, caractérisé en ce que ladite capacité est entièrement intégrée à un collecteur d'échappement (8;28) et en ce que ledit collecteur d'échappement (8;28) présente une paroi latérale servant de bride de fixation, ladite paroi présentant au moins un orifice destiné à être positionné en regard des orifices de sortie desdits conduits d'échappement (4;24).
